# NEUE EUROPÄISCHE PATENTSCHRIFT

(11) **EP 2 061 627 B2**
(45) Veröffentlichungstag und Bekanntmachung des Hinweises auf die Entscheidung über den Einspruch: **23.07.2014**
(45) Hinweis auf die Patenterteilung: 20.10.2010
(21) Anmeldenummer: 07801333.1
(22) Anmeldetag: 06.09.2007
(51) Int. Cl.: B23Q 11/00, F16C 39/06, F16F 15/02, F16F 15/18

(54) **ARBEITSSPINDEL**
WORK SPINDLE
BROCHE DE TRAVAIL

(30) Priorität: 11.09.2006 DE 102006042539
(43) Veröffentlichungstag der Anmeldung: 27.05.2009
(73) Patentinhaber: Gottfried Wilhelm Leibniz Universität Hannover, 30167 Hannover (DE)
(72) Erfinder: DENKENA, Berend, 30900 Wedemark (DE); PONICK, Bernd, 14612 Falkensee (DE)
(74) Vertreter: Plöger, Jan Manfred
(86) Internationale Anmeldenummer: PCT/DE2007/001598
(87) Internationale Veröffentlichungsnummer: WO 2008/031406

(56) Entgegenhaltungen:
- EP-A- 0 612 933
- EP-A- 0 674 112
- DE-A1- 2 644 380
- DE-A1- 19 837 624
- DE-B- 1 166 589
- DE-B3-102004 063 259
- DE-C2- 2 331 446
- DE-T2- 69 409 998
- DE-U1-202004 020 873
- GB-A- 1 562 799
- US-B1- 6 508 614

## Beschreibung

Die Erfindung betrifft eine Arbeitsspindel gemäß dem Oberbegriff von Anspruch 1.

Bei spanenden Werkzeugmaschinen stellen auftretende Schwingungen ein Problem für die erreichbare Produktivität und die Qualität des mit der Werkzeugmaschine bearbeiteten Werkstücks dar. Die auftretenden Schwingungen können unterteilt werden in freie Schwingungen, bei denen die Arbeitsspindel nach einer impulsförmigen Anregung mit ihrer Eigenfrequenz ausschwingt, fremderregte Schwingungen, bei denen die Arbeitsspindel mit der Frequenz einer Anregung schwingt (beispielsweise durch Unwuchten oder periodische Kräfte), und selbsterregte Schwingungen, die durch eine Energieeinbringung von der Arbeitsspindel selbst erzeugt werden.

Alle drei Arten von Schwingungen begrenzen die für die spanende Werkzeugmaschine maximal erreichbare Bearbeitungsgeschwindigkeit und stellen eine Belastung für die Komponenten der Arbeitsspindel dar. Die Belastungen können zu Lagerschäden und zu Werkzeugbrüchen beitragen.

Es ist bekannt, zur Verringerung der Schwingungen von Arbeitsspindeln aktive und passive Methoden einzusetzen. Zu den passiven Methoden zählt eine Erhöhung der Dämpfung durch eine geeignete Materialauswahl und durch eine steife Konstruktion der Arbeitsspindel.

Aktive Methoden, auf die sich die vorliegende Erfindung bezieht, erreichen eine Verringerung der Schwingungen durch das Aufbringen von Kräften auf Komponenten der Arbeitsspindel.

Aus der DE 694 09 998 T2 ist eine Schwingungskontrollanlage für rotierende Maschinen der Textilindustrie bekannt. Die bekannte Schwingungskontrollanlage umfasst eine Hohlwelle, die in zwei Lagern gelagert ist und einen Elektromotor umschließt, mit dem die Hohlwelle angetrieben wird. Dicht bei den Lagern sind Magnetaktoren angeordnet, die so angesteuert werden, dass selbsterregte Schwingungen der Hohlwelle unterdrückt werden. Dieses Prinzip ist auf Arbeitsspindeln nicht übertragbar, da bei Arbeitsspindeln ein freies Ende zum Antrieb beispielsweise eines Werkzeugs vorhanden sein muss, was mit einer Hohlwelle nicht realisiert werden kann.

Aus der DE 100 23 973 A1 ist bekannt, eine Arbeitsspindel in ihren Lagern auszulenken, um so Schwingungen und Lagerabweichungen zu kompensieren.

Aus der DE 197 82 264 T1 und der DE 197 81 660 T1 sind elektromagnetische Dämpfungssysteme für Festplattenlaufwerke bekannt, die zwei Lager aufweisen. Zur Dämpfung werden auf die Lager magnetische Kräfte aufgebracht, die den Schwingungen entgegenwirken. Dieses System ist nur dann anwendbar, wenn die Lager hinreichend elastisch sind, um sie durch magnetische Kräfte hinreichend weit auslenken zu können. Das ist bei Arbeitsspindeln, bei denen die Lager zur passiven Schwingungsdämpfung sehr steif ausgelegt sind, nicht der Fall.

Aus der DE 1 166 589 ist eine Arbeitsspindel bekannt, bei der die Ausgleichskraft durch einen mechanisch beaufschlagten Stützkörper erfolgt. Nachteilig an dieser Arbeitsspindel ist, dass sie zum Kompensieren von Werkzeugschwingungen hoher Frequenz, wie sie beim Fräsen auftreten, zu träge ist.

Aus der EP 0 612 933 A1 und der DE 10 2004 063 259 B3 ist eine gattungsgemäße Arbeitsspindel bekannt, bei der zwischen zwei Lagern ein elektrischer Motor vorgesehen ist. Der elektrische Motor besitzt auf einem magnetischen Kern sowohl Antriebswicklungen als auch Zusatz-Wicklungen, die dem Positionieren der Welle zwischen den beiden Lagern dienen. Die Zusatz-Wicklungen werden so bestromt, dass sie mit demjenigen Magnetfeld zusammenwirken, was von den für den Antrieb zuständigen Wicklungen erzeugt wird. Nachteilig an einem derartigen Aufbau ist, dass eine sehr komplexe Regelung notwendig ist, um extern angeregte Schwingungen wirksam zu unterdrücken.

Aus der US 6,508,614 B1 ist eine Spindel bekannt, die eine kombinierte aerodynamische und magnetische Lagerung besitzt. Nachteilig an der dort beschriebenen Spindel ist, dass die großen zum Kompensieren von Auslenkungen notwendigen Kräfte nicht sicher aufgebracht werden können.

Aus der EP 0 612 933 A1 ist eine Vibrationskontrollvorrichtung für eine schnelllaufende Spindel bekannt, bei der auf der Welle aufsitzende Magnetaktoren mit Magneten des Stators wechselwirken. Nachteilig an dieser bekannten Vorrichtung ist die schwierige Ansteuerung der Magneten.

Aus der GB-A-1 562 799 ist eine Spindel bekannt, die für Schleifmaschinen eingesetzt wird und die magnetisch gelagert wird. Bei einer derartigen Spindel können keine so großen radialen Kräfte auftreten, dass es zu signifikanten Durchbiegungen der Welle kommt. Etwaige Schwingungen können durch die magnetische Lagerung abgefangen werden. Nachteilig an einer derartigen Spindel ist, dass sie für große axiale Kräfte nicht geeignet ist.

Der Erfindung liegt die Aufgabe zugrunde, eine Arbeitspindel vorzuschlagen, die ein Kompensieren von Schwingungen auch bei hohen Frequenzen erlaubt.

Die Erfindung löst die Aufgabe durch eine Arbeitsspindel mit den Merkmalen von Anspruch 1.

Vorteilhaft an der Erfindung ist, dass dadurch, dass der Aktor zwischen den Lagern angeordnet ist, sich der Aktor nahe an einer Stelle befindet, an der eine durch das Werkzeug verursachte Schwingung eine große Auslenkung der Welle hervorrufen kann. An dieser Stelle kann dieser Schwingung deshalb besonders effektiv entgegengewirkt werden.

Vorteilhaft ist zudem, dass als Aktor ein Reluktanzkraftaktor verwendet wird, mit dem berührungslos und schnell große Kraftamplituden erzeugt werden können. Zur Erzeugung dieser Kraftamplituden ist es vorteilhafterweise zudem nicht notwendig, elektrische Energie auf drehende Teile der Arbeitsspindel zu übertragen. Ein weiterer Vorteil der Erfindung ist, dass die Schwingungsdämpfung auch bei hohen Drehzahlen möglich ist. Vorteilhaft ist außerdem, dass der Aktor im Wesentlichen verschleißfrei ausgeführt werden kann. Ein weiterer Vorteil ist, dass der Aktor in bestehende Komponenten der Arbeitsspindel integrierbar ist. Hierdurch ergibt sich eine kompakte Bauweise. Gleichzeitig kann die Erfindung mit nur geringen konstruktiven Veränderungen in bestehenden Arbeitsspindeln implementiert werden.

Im Rahmen der vorliegenden Beschreibung wird unter einer Arbeitsspindel insbesondere eine Werkzeugmaschinen-Motorspindel verstanden, die elektrisch angetrieben ist. Da die Erfindung auch bei sehr hohen Umdrehungszahlen einsetzbar ist, bezieht sich die Erfindung auch auf eine Hochgeschwindigkeits-Arbeits- bzw. -Motorspindel, die für Drehzahlen oberhalb von 20 000 Umdrehungen/Minute eingerichtet ist.

Es ist für die Erfindung nicht notwendig, dass die Arbeitsspindel genau zwei Lager aufweist. Es ist ausreichend, dass die Arbeitsspindel zumindest zwei Lager aufweist. Es kann sich bei den Lagern um magnetische, aerostatische, hydrostatische, hydrodynamische Lager oder Wälzlager handeln.

Es ist zudem nicht notwendig, dass das freie Ende über die Lager hinausreicht. Maßgeblich ist lediglich, dass an einer Stelle jenseits der Lager eine radiale Störkraft aufgebracht werden kann. So ist es möglich, dass die Antriebswelle mit einem der Lager abschließt. In diesem Fall kann das freie Ende eine in der Antriebswelle vorgesehene Kopplungsvorrichtung aufweisen, mittels derer eine Werkzeugaufnahme für ein Werkzeug angebracht werden kann. In diesem Fall führt eine radiale Störkraft ebenfalls zu einer Auslenkung der Antriebswelle von der Drehachse.

In einer bevorzugten Ausführungsform ist der Aktor so ausgebildet, dass die Ausgleichskraft radial, insbesondere radial nach außen, auf die Antriebswelle wirkt. Das hat den Vorteil, dass eine besonders große Ausgleichskraft auf die Antriebwelle aufbringbar ist. In einer alternativen Ausführungsform ist der Aktor so ausgebildet, dass die Ausgleichskraft eine radial, insbesondere radial nach außen wirkende Ausgleichskraftkomponente auf die Antriebswelle aufbringen kann. In diesem Fall ist der Aktor so ausgebildet, dass zusätzlich eine axial auf die Antriebswelle wirkende Ausgleichskraftkomponente aufbringbar ist. Das hat den Vorteil, dass auch axiale Schwingungen der Antriebswelle gedämpft werden können.

Bevorzugt ist der Aktor in einer Umgebung einer Bauchstelle angeordnet, wobei die Bauchstelle eine Stelle maximaler Auslenkung von der Drehachse ist, wenn eine radiale Störkraft auf das freie Ende der Antriebswelle wirkt. Besonders bevorzugt ist der Aktor in einer Umgebung derjenigen Bauchstelle angeordnet, die zu der ersten Biege-Eigenschwingungsform der Antriebswelle gehört. In diesem Fall ist eine besonders effektive Dämpfung möglich. Unter dem Ausdruck "in einer Umgebung" ist zu verstehen, dass der Aktor nicht notwendigerweise in unmittelbarer Nähe der Bauchstelle angeordnet sein muss. Insbesondere ist der Aktor in einem Bereich angeordnet, in dem die Auslenkung der Antriebswelle mehr als der Hälfte der maximalen Auslenkung zwischen den Lagern entspricht.

Der Antrieb der Arbeitsspindel umfasst einen Stator, der die Antriebswelle zwischen den Lagern zumindest teilweise umgreift und zum Zusammenwirken mit einem auf der Antriebswelle zwischen den Lagern angeordneten Rotor ausgebildet ist, wobei der Aktor einen Aktor-Elektromagneten umfasst, der im Stator angeordnet ist.

Besonders bevorzugt weist der Stator Antriebs-Elektromagnete und eine Antriebs-Stromversorgung zum Versorgen der Antriebs-Elektromagnete mit elektrischer Energie auf, und die Arbeitsspindel umfasst eine von der Antriebs-Stromversorgung unabhängige Aktor-Stromversorgung zum Versorgen des Aktor-Elektromagneten mit elektrischer Energie. Hierdurch wird erreicht, dass der Aktor unabhängig vom Antrieb ansteuerbar ist. Während also die Antriebs-Stromversorgung mit den Antriebs-Elektromagneten zusammenwirkt, um ein Drehmoment auf die Arbeitsspindel aufzubringen, wirkt die Aktor-Stromversorgung mit dem Aktor-Elektromagneten zusammen, um Schwingungen der Antriebswelle zu verringern.

In einer bevorzugten Ausführungsform sind die Antriebs-Elektromagneten in mindestens zwei separat bestrombaren Wicklungszweigen angeordnet. Vorzugsweise umfassen die Antriebs-Elektromagneten mindestens zwei, insbesondere drei Phasen, und jede der zwei bzw. drei Phasen umfasst zumindest zwei separat bestrombare Wicklungszweige. Möglich sind auch mehr als zwei Wicklungszweige je Phase, beispielsweise vier oder sechs Wicklungszweige.

Erfindungsgemäß umfasst der Aktor ein Magnetelement aus ferromagnetischem Material, das an der Antriebswelle angeordnet ist. Bevorzugt handelt es sich dabei um weichmagnetisches Material. Das hat den Vorteil, dass ein magnetisches Feld stets eine möglichst hohe radial nach außen wirkende Kraft auf das Magnetelement ausübt. Das Magnetelement ist bevorzugt so gestaltet und/oder angeordnet, dass ein von einem Antriebs-Elektromagneten erzeugtes Magnetfeld keine bzw. im Wesentlichen keine Radialkraft auf das Magnetelement ausübt. Dadurch wird eine Wechselwirkung zwischen dem elektrischen Antrieb und dem Aktor weitgehend vermieden.

Erfindungsgemäß bilden das Magnetelement einerseits und der Aktor-Elektromagnet bzw. die Aktor-Elektromagneten einen Reluktanzkraftaktor. Dieser Reluktanzkraftaktor ist bevorzugt so ausgebildet, dass er eine auf die Antriebswelle wirkende Ausgleichskraft aufbringen kann, die eine radial nach außen weisende Komponente hat. Wenn keine axiale Komponente erzeugt werden soll, liegen sich das Magnetelement und der Aktor-Elektromagnet bzw. die Aktor-Elektromagneten bevorzugt auf axial gleicher Höhe bezüglich der Antriebswelle gegenüber.

Es ist günstig, wenn das Magnetelement aus Blechen aufgebaut ist, die gegeneinander elektrisch isoliert sind. Die elektrische Isolation ist beispielsweise durch eine Oxid- und/oder eine Lackschicht gebildet und so ausgeführt, dass beim Betrieb der Arbeitsspindel Wirbelströme im Magnetelement minimiert bzw. weitgehend unterdrückt werden.

In einer bevorzugten Ausführungsform ist das Magnetelement in der Umgebung der Bauchstellen, insbesondere in der Umgebung einer Mitte zwischen den zwei Lagern angeordnet. Vorteilhaft hieran ist, dass eine auf ein so angeordnetes Magnetelement wirkende magnetische Ausgleichskraft besonders effektiv der Auslenkung der Antriebswelle entgegenwirken kann.

In einer Ausführungsform umfasst der Rotor Permanentmagnete und das Magnetelement ist zwischen den Permanentmagneten angeordnet. Hierdurch wird vorteilhafterweise eine besonders kompakte Anordnung der Arbeitsspindel ermöglicht. Besonders günstig ist in diesem Fall, wenn der Aktor-Elektromagnet bzw. die Aktor-Elektromagneten so relativ zu den Permanentmagneten angeordnet sind, dass sie mit diesen nur so schwach zusammenwirken, dass der Betrieb der Arbeitsspindel dadurch nicht beeinträchtigt wird. Das kann beispielsweise dadurch erreicht werden, dass die beidseits des Magnetelements angeordneten Permanentmagnete bezüglich einer jeden radialen Richtung jeweils entgegengesetzte Polaritäten aufweisen. Eine durch den Aktor-Elektromagneten hervorgerufene Anziehungskraft auf einen der Permanentmagneten wird dann durch eine entgegengesetzte Kraft auf den jeweils anderen Elektromagneten weitgehend kompensiert.

In einer bevorzugten Ausführungsform weist die Arbeitsspindel zudem einen Sensor zum Erfassen der Auslenkung der Antriebswelle von der Drehachse auf. Dieser Sensor ist insbesondere ein berührungslos arbeitender Sensor, wie beispielsweise ein Laser-Sensor oder ein induktiver Sensor.

Bevorzugt umfasst die Arbeitsspindel eine Steuerung, die mit der Antriebs-Stromversorgung so zusammenwirkt, dass die Antriebs-Elektromagnete mit dem Magnetelement zum Aufbringen einer der Auslenkung entgegenwirkenden Ausgleichskraft auf die Antriebswelle zusammenwirken. Vorteilhaft hieran ist, dass eine besonders kompakte Bauform der Arbeitsspindel erreichbar ist. Zudem muss lediglich ein Magnetelement auf der Antriebswelle angeordnet werden, um Schwingungen der Arbeitsspindel effektiv dämpfen zu können. Es ist daher möglich, bestehende Arbeitsspindeln mit geringem konstruktivem Aufwand umzurüsten, um so eine verbesserte Dämpfung zu erreichen.

Die Erfindung umfasst zudem eine spanende Werkzeugmaschine mit einer erfindungsgemäßen Arbeitsspindel, insbesondere eine Fräsmaschine, eine Schleifmaschine oder eine Drehmaschine.

Ein Verfahren zum Betreiben der Arbeitsspindel wird so durchgeführt, dass Schwingungen der Antriebswelle gedämpft bzw. das die Auslenkung des freien Endes der Antriebswelle verringert wird und umfasst bevorzugt den Schritt des Ermittelns der Auslenkung der Antriebswelle von der Drehachse. Diese Auslenkung kann durch eine extern angreifende Kraft, aber auch durch Unwuchten in der Arbeitsspindel oder in Komponenten verursacht werden, die mit der Antriebswelle der Arbeitsspindel verbunden sind.

Aus der so ermittelten Auslenkung wird dann in Echtzeit diejenige Ausgleichskraft berechnet, die notwendig ist, um Schwingungen der Arbeitsspindel zu dämpfen. Unter dem Ermitteln der Auslenkung werden alle Verfahren verstanden, die dazu geeignet sind, als Grundlage für die Berechnung der benötigten Auslenkkraft zu dienen. Beispielsweise wird die Auslenkung der Antriebswelle in der Nähe des freien Endes gemessen. Es ist jedoch auch möglich, die Auslenkung zwischen den beiden Lagern zu messen. Es ist dabei nicht notwendig, dass die Auslenkung direkt in Form einer Länge gemessen wird. Es ist beispielsweise möglich, mittels eines Beschleunigungssensors die Beschleunigung zu messen und aus der Beschleunigung direkt die benötigte Ausgleichskraft zu berechnen.

Es ist allerdings nicht notwendig, die Ausgleichskraft zu berechnen. Es ist ausreichend, einen elektrischen Strom zu ermitteln, der, wenn er auf den Aktor aufgebracht wird, Schwingungen der Antriebwelle dämpft oder die Auslenkung des freien Endes vermindert.

Im Folgenden wird die Erfindung anhand der Zeichnungen näher erläutert. Dabei zeigt:
- Figur 1: eine schematische Darstellung einer Antriebswelle einer Arbeitsspindel, die zwischen zwei Lagern um eine Drehachse drehbar gelagert ist, und auf die eine radiale Störkraft wirkt,
- Figur 2: eine Schnittansicht einer erfindungsgemäßen Ar- beitsspindel und,
- Figur 3: eine Prinzipzeichnung einer ersten Ausführungs- form einer erfindungsgemäßen Arbeitsspindel

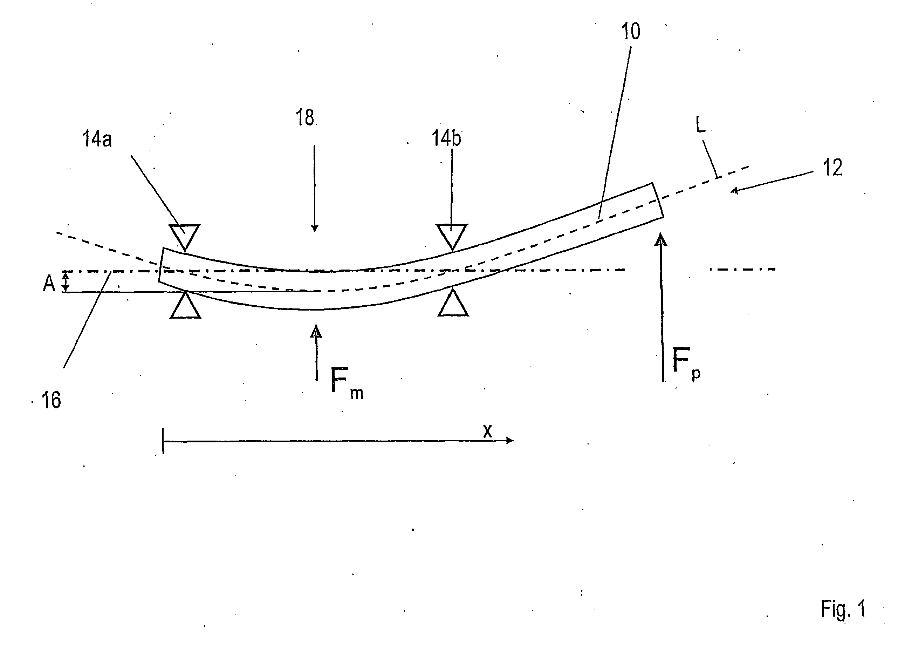

Figur 1 zeigt schematisch eine Antriebswelle 10, die ein freies Ende 12 aufweist, an dem ein nicht eingezeichnetes spanendes Werkzeug, wie beispielsweise ein Fräser oder eine Schleifscheibe, befestigt werden können. Die Antriebswelle 10 ist zwischen zwei Lagern, einem ersten Lager 14a und einem zweiten Lager 14b um eine Drehachse 16 drehbar gelagert. Wenn auf die Antriebswelle 10 eine radiale Störkraft Fₚ wirkt, so kommt es zwischen den Lagern 14a, 14b zu einer Auslenkung der Antriebswelle 10 von der Drehachse 16.

Ohne Auslenkung fällt eine Längsachse L der Antriebswelle 10 mit der Drehachse 16 zusammen. Die Auslenkung führt dazu, dass die Längsachse L einen von der axialen Position x abhängigen Abstand A(x) von der Drehachse 16 aufweist.

Durch Aufbringen einer Ausgleichskraft Fₘ, die zwischen den beiden Lagern 14a und 14b radial angereift, kann die Auslenkung A der Antriebswelle 10 zwischen den Lagern 14a, 14b und am freien Ende 12 kompensiert werden.

Gemäß einer ersten Alternative wird die Ausgleichskraft Fₘ so gewählt, dass die Auslenkung der Antriebswelle 10 zwischen den Lagern 14a, 14b weitgehend kompensiert wird. Alternativ kann die Ausgleichskraft Fₘ so gewählt werden, dass die Auslenkung des freien Endes 12 der Antriebswelle 10 kompensiert wird. Dazu kann es notwendig sein, die Antriebswelle 10 zwischen den Lagern 14a, 14b so weit auszulenken, dass sie eine Auslenkung von der Drehachse 16 aufweist, wobei diese Auslenkung jedoch derjenigen Auslenkung entgegengesetzt verläuft, die durch die Störkraft Fp hervorgerufen wird. In Figur 1 müsste die Antriebswelle 10 in diesem Fall so ausgelenkt werden, dass sie zwischen den Lagern 14a, 14b nach oben gewölbt ist.

Die in Figur 1 gezeigte Auslenkung kann Folge von freien, fremderregten und selbsterregten Schwingungen sein. In Figur 1 ist die erste Grundschwingung einer selbsterregten Schwingung der Antriebswelle 10 gezeigt, bei der zwischen den beiden Lagern 14a, 14b eine Bauchstelle 18 auftritt, und bei der die beiden Lager 14a, 14b Knotenstellen der Schwingung darstellen. Unter der Bauchstelle 18 ist die axiale Position x der Antriebswelle 10 zu verstehen, an der zwischen den beiden Lagern 14a, 14b die maximale Auslenkung A auftritt. Die Bauchstelle 18 ändert ihre Lage daher nicht, wenn beispielsweise die Störkraft Fp in eine Richtung angreift, die der in Figur 1 gezeigten Störkraft Fp genau entgegengesetzt ist.

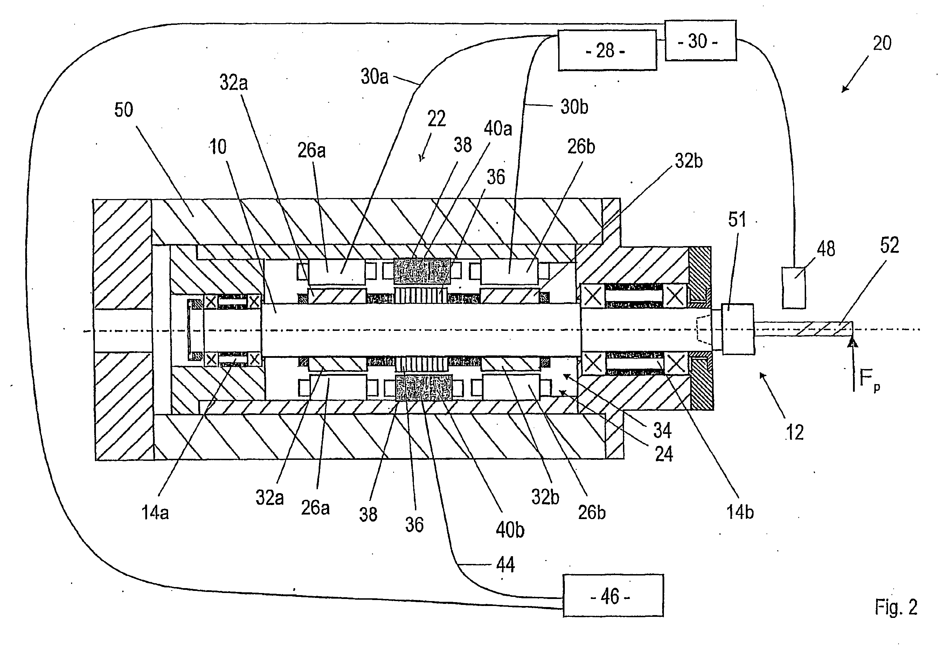

Figur 2 zeigt eine Arbeitsspindel 20, bei der die Antriebswelle 10 zwischen zwei Lagern 14a, 14b in Form von Wälzlagern gelagert ist. Axial zwischen den Lagern 14a, 14b ist ein Antrieb 22 zum Antreiben der Antriebswelle 10 angeordnet. Der Antrieb 22 umfasst einen Stator 24, der zwei Antriebs-Elektromagneten 26a, 26b umfasst, die die Antriebswelle 10 zwischen den Lagern 14a, 14b umgreifen. Der Stator 24 weist zudem eine in Figur 2 schematisch eingezeichnete Antriebs-Stromversorgung 28 auf, mit der die Antriebs-Elektromagnete 26a, 26b durch elektrische Leitungen 30a bzw. 30b verbunden sind. Die Antriebs-Stromversorgung ist mit einer digitalen Steuerung 30 verbunden, mittels derer die Antriebs-Elektromagnete 26a, 26b durch die Antriebs-Stromversorgung 28 bestromt werden.

Den Antriebs-Elektromagneten 26a, 26b liegen auf axial gleicher Höhe Permanentmagneten 32a, 32b gegenüber, die Teile eines Rotors 34 darstellen. Die Permanentmagneten 32a, 32b umfassen in Figur 2 nicht eingezeichnete Permanentmagnet-Elemente, die in Umfangsrichtung der Antriebswelle 10 mit jeweils alternierenden Polaritäten angeordnet sind. Diese Permanentmägnet-Elemente wirken auf bekannte Art mit den Antriebs-Elektromagneten 26a, 26b zusammen, um ein Drehmoment auf die Antriebswelle 10 aufzubringen. Dazu weisen die Antriebselektromagnete 26a, 26b Wicklungszweige auf, die jeweils voneinander separat von der Antriebs-Stromversorgung 28 bestrombar sind.

Als Alternative zu den Permanentmagnet-Elementen kann der Antriebs-Elektromagnet im rotierenden Teil auch mit einem weichmagnetischen Blechpaket ausgeführt werden, in das eine in sich kurzgeschlossene Wicklung (sog. Käfigwicklung) eingebracht ist. Die Käfigwicklung ist axial außerhalb eines Magnetelements 36 angeordnet, die im Folgenden beschrieben ist.

Das Magnetelement 36 ist zwischen den Permanentmagneten 32a, 32b angeordnet und umgreift die Antriebswelle 10 vollständig. Das Magnetelement 36 umfasst eine Vielzahl gegeneinander elektrisch isolierter Bleche aus weichmagnetischem Material und ist durch nicht eingezeichnete Befestigungsmittel an der Antriebswelle 10 befestigt. In einer alternativen Ausführungsform wird das Magnetelement 36 kraftschlüssig an der Antriebswelle 10 befestigt, beispielsweise mittels eines Schrumpfsitzes.

Auf gleicher axialer Höhe bezüglich der Drehachse 16 liegt dem Magnetelement 36 ein Aktor-Elektromagnet 38 gegenüber, der aus mehreren Aktor-Elektromagnetelementen 40a, 40b, ... aufgebaut ist, wobei in Figur 2 lediglich die beiden Aktor-Elektromagnetelemente 40a und 40b eingezeichnet sind. Der Aktor-Elektromagnet 38 und das Magnetelement 36 sind gemeinsam Bestandteile eines Reluktanzkraftaktors 42.

Der Aktor-Elektromagnet 38 ist über ein mehradriges elektrisches Kabel 44, mit dem jedes der Aktor-Elektromagnetelemente 40a, 40b, ... einzeln kontaktiert ist, mit einer Aktor-Stromversorgung 46 verbunden. Die Aktor-Stromversorgung 46 ist dazu ausgebildet, um die einzelnen Aktor-Elektromagnetelemente einzeln zu bestromen.

Die Steuerung 30 ist über eine elektrische und/oder optische Verbindung mit einem in Figur 2 schematisch eingezeichneten Sensor 48 verbunden, der die Auslenkung der Antriebswelle 10 gegenüber der Drehachse 16 ermittelt. Dieser Sensor 48 kann jenseits der beiden Lager 14a, 14b oder zwischen diesen angeordnet sein. Besonders günstig ist, den Sensor 48 im Stator 24 anzuordnen. Alternativ kann auch der Stator 24 so ausgebildet sein, dass mit ihm eine Auslenkung der Antriebswelle 10 von der Drehachse 16 messbar ist.

Der Stator 24 und die Lager 14a, 14b sind an einem Gehäuse 50 befestigt, das die Antriebswelle 10 zwischen den Lagern 14a, 14b vollständig umschließt. Mit dem Gehäuse 50 wird die Arbeitsspindel 20 in eine nicht eingezeichnete Werkzeugmaschine, beispielsweise eine Fräsmaschine, eingebaut. Zum Betrieb wird am freien Ende 12 ein spanendes Werkzeug 52 angebracht, das in Figur 2 in Form eines schematisch dargestellten Fräsers gezeigt ist. Das spanende Werkzeug 52 wird dazu in einer Werkzeugaufnahme 51 eingespannt. Beim Einsatz des spanenden Werkzeugs 52 kommt es zu Störkräften, die auf das freie Ende 12 der Antriebswelle 10 wirken und zu einer Auslenkung der Antriebswelle 10 führen.

Beim Betrieb der Arbeitsspindel wirken der Stator 24 und der Rotor 34 so zusammen, dass sie die Antriebswelle 10 in Drehung versetzen. Wenn das spanende Werkzeug 52 mit einem nicht eingezeichneten Werkstück in Eingriff kommt, so entsteht eine radiale Störkraft Fp, die am spanenden Werkzeug 52 eingreift und die Antriebswelle 10 in fremderregte Schwingungen versetzt. Zwischen den Lagern 14a, 14b kommt es dadurch zu einer Auslenkung der Antriebswelle 10 von der Drehachse 16, die von dem Sensor 48 erfasst wird (vgl. Figur 1).

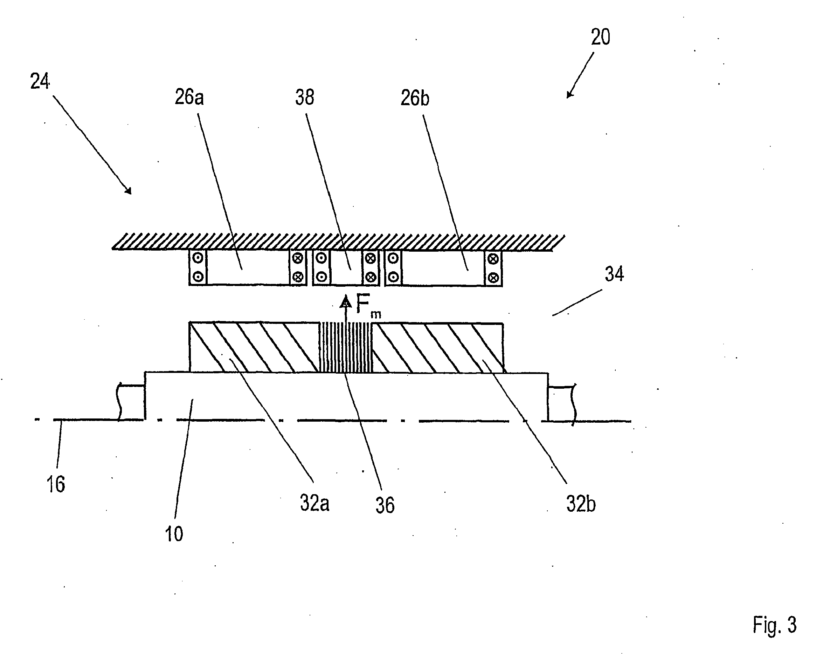

Die Steuerung 30, die mit der Aktor-Stromversorgung 46 verbunden ist, sendet aufgrund des Signals vom Sensor 48 ein Ansteuersignal an die Aktor-Stromversorgung 46, woraufhin diese die Aktor-Elektromagnetelemente 40a, 40b des Aktor-Elektromagneten 38 bestromt. Durch diesen Strom bildet sich ein Magnetfeld zwischen dem Aktor-Elektromagneten 38 und dem Magnetelement 36 aus. Dieses Magnetfeld führt dazu, dass das Magnetelement 36 eine Ausgleichskraft in Form einer magnetischen Anziehungskraft Fₘ erfährt, wie in Figur 3 gezeigt ist. Aufgrund dieser Ausgleichskraft Fₘ entsteht am spanenden Werkzeug 52 eine der Störkraft Fₚ entgegengerichtete Kraft, wodurch die Auslenkung des spanenden Werkzeugs 52 vermindert wird.

Wie in Figur 3 gezeigt ist, liegen sich die Permanentmagnete 32a bzw. 32b einerseits und die Antriebs-Elektromagnete 26a bzw. 26b andererseits und das Magnetelement 36 und der Aktor-Elektromagnet 38 auf gleicher axialer Höhe unmittelbar gegenüber. Hierdurch wird verhindert, dass ein Magnetfeld, was vom Aktor-Elektromagneten 38 aufgebaut wird, die Permanentmagnete 32a, 32b wesentlich beeinflusst. Umgekehrt wird verhindert, dass die Wirkung des Aktor-Elektromagneten wesentlich durch die Permanentmagnete oder den Antriebs-Elektromagneten beeinflusst wird.

### Bezugszeichenliste

- 10: Antriebswelle
- 12: freies Ende
- 14a, b: Lager
- 16: Drehachse
- 18: Bauchstelle
- 20: Arbeitsspindel
- 22: Antrieb
- 24: Stator
- 26a, b: Antriebs-Elektromagneten
- 28: Antriebs-Stromversorgung
- 30: Steuerung
- 32a, b: Permanentmagnete
- 34: Rotor
- 36: Magnetelement
- 38: Aktor-Elektromagnet
- 40a, b: Aktor-Elektroelement
- 42: Reluktanzkraftaktor
- 44: Kabel
- 46: Aktor-Stromversorgung
- 48: Sensor
- 50: Gehäuse
- 51: Werkzeugaufnahme
- 52: spanendes Werkzeug

- Fp: Störkraft
- Fₘ: Ausgleichskraft
- L: Längsachse der Antriebswelle

## Patentansprüche

1. Arbeitsspindel (20), insbesondere für eine spanende Werkzeugmaschine, mit
a) einer Antriebswelle (10), die ein freies Ende (12) aufweist zum Antreiben eines spanenden Werkzeugs (52),
b) zwei Lagern (14a, 14b), in denen die Antriebswelle (10) um eine Drehachse (16) drehbar gelagert ist, und
c) einem Antrieb (22) für die Antriebswelle (10), wobei die Antriebswelle (10) dann, wenn eine radiale Störkraft (Fₚ) auf das freie Ende (12) wirkt, zwischen den Lagern (14a, 14b) eine Auslenkung von der Drehachse (16) aufweist,
d) einem zwischen den Lagern (14a, 14b) angeordneten Aktor (42) zum Aufbringen einer der Auslenkung entgegen wirkenden Ausgleichskraft (Fₘ) auf die Antriebswelle (10),
e) wobei der Antrieb (22) einen Stator (24) umfasst, der die Antriebswelle (10) zwischen den Lagern (14a, 14b) zumindest teilweise umgreift, zum Zusammenwirken mit einem auf der Antriebswelle (10) zwischen den Lagern (14a, 14b) angeordneten Rotor (34), und
f) wobei der Aktor (42) einen Aktor-Elektromagneten (38) umfasst, der im Stator (24) angeordnet ist,
g) wobei der Aktor ein Magnetelement (36) aus ferromagnetischem Material umfasst, das an der Antriebswelle (10) angeordnet ist und mit dem Aktor-Elektromagneten (38) einen Reluktanzkraftaktor (42) bildet
h) wobei der Rotor (34) Permanentmagnete (32a, 32b) umfasst und das Magnetelement (36) zwischen den Permanent-magneten (32a, 32b) angeordnet ist, oder
i) wobei der Rotor (34) Blechpakete mit einer in sich kurzgeschlossenen Käfigwicklung umfasst und das Magnetelement (36) zwischen diesen Blechpaketen angeordnet ist, insbesondere ohne dass die Käfigwicklung das Magnetelement durchsetzt.

2. Arbeitsspindel nach Anspruch 1, **dadurch gekennzeichnet, dass** der Aktor (42) so ausgebildet ist, dass die Ausgleichskraft (Fₘ) radial, insbesondere radial nach außen, auf die Antriebswelle (10) wirkt.

3. Arbeitsspindel nach einem der vorstehenden Ansprüche, **dadurch gekennzeichnet, dass** die Antriebswelle (10) dann, wenn die radiale Störkraft (F_{P}) auf das freie Ende (12) wirkt, zwischen den Lagern (14a, 14b) eine Bauchstelle (18) maximaler Auslenkung von der Drehachse (16) aufweist, und dass der Aktor (42) in einer Umgebung der Bauchstelle (18) angeordnet ist.

4. Arbeitsspindel nach einem der vorstehenden Ansprüche, **dadurch gekennzeichnet, dass**
- der Stator (24) Antriebs-Elektromagnete (26a, 26b) und eine Antriebs-Stromversorgung (28) zum Versorgen der Antriebs-Elektromagnete (26a, 26b) mit Strom aufweist und dadurch, **dass**
- die Arbeitsspindel (20) eine von der Antriebs-Stromversorgung (28) unabhängige Aktor-Stromversorgung (46) zum Versorgen des Aktor-Elektromagneten (38) mit Strom umfasst.

5. Arbeitsspindel nach Anspruch 4, **dadurch gekennzeichnet, dass** die Antriebs-Elektromagneten (26a, 26b) in mindestens zwei separat bestrombaren Wicklungszweigen je Phase angeordnet sind.

6. Arbeitsspindel nach einem der vorstehenden Ansprüche, **dadurch gekennzeichnet, dass** das Magnetelement (36) aus Blechen aufgebaut ist, die gegeneinander elektrisch isoliert sind.

7. Arbeitsspindel nach einem der vorstehenden Ansprüche, **dadurch gekennzeichnet, dass** das Magnetelement (36) in der Umgebung der Bauchstelle (18), insbesondere in der Umgebung einer Mitte zwischen den zwei Lagern (14a, 14b), angeordnet ist.

8. Arbeitsspindel nach einem der vorstehenden Ansprüche **dadurch gekennzeichnet, dass** die Wicklung des Antriebs-Elektromagneten (26a, 26b) so ausgebildet ist, dass sie axial durch den Aktor-Elektromagneten (38) derart hindurchtritt, dass keine wesentliche Wechselwirkung zwischen Antriebs-Elektromagneten (26a, 26b) und Aktor-Elektromagneten (38) entsteht.

9. Arbeitsspindel nach einem der vorstehenden Ansprüche, **gekennzeichnet durch** einen Sensor (48) zum Erfassen der Auslenkung der Antriebswelle (10) von der Drehachse (16).

10. Arbeitsspindel nach Anspruch 9, **gekennzeichnet durch** eine Steuerung (30), die mit dem Sensor (48) verbunden und eingerichtet ist, um den Aktor (42) so zu steuern bzw. zu regeln, dass der Aktor (42) die der Auslenkung der Antriebswelle (10) entgegen wirkende Ausgleichskraft (Fₘ) auf die Antriebswelle (10) aufbringt.

11. Arbeitsspindel nach einem der vorstehenden Ansprüche, **dadurch gekennzeichnet, dass**
- der Stator (24) Antriebs-Elektromagneten (26a, 26b) und eine Antriebs-Stromversorgung (28) zum Versorgen der Antriebs-Elektromagneten (26a, 26b) mit Strom aufweist, und dass
- die Antriebs-Stromversorgung (28) eine Steuerung (30) umfasst, die zum Steuern der Antriebs-Elektromagneten (26a, 26b) ausgebildet ist,
- so dass die Antriebs-Elektromagnete (26a, 26b) mit dem Magnetelement (36) zum Aufbringen der der Auslenkung entgegen wirkenden Ausgleichskraft (Fₘ) auf die Antriebswelle (10) zusammenwirken.

12. Spanende Werkzeugmaschine mit einer Arbeitsspindel (20) nach einem der Ansprüche 1 bis 11.

## Claims

1. A work spindle (20), particularly for a cutting machine tool, with
a) an actuating shaft (10) that has a free end (12) for running a cutting tool (52),
b) two bearings (14a, 14b), in which the actuating shaft (10) is pivotable around a rotation axis (16), and
c) a drive (22) for the actuating shaft (10), the actuating shaft (10) deviating from the rotation axis (16) in the case when a radial disturbance force (Fₚ) affects the free end (12),
d) an actuator (42) arranged between the bearings (14a, 14b) to raise a balancing force (Fₘ) working against the deviation, applied to the actuating shaft (10),
e) the drive (22) comprising a stator (24) which encompasses the actuating shaft (10) between the bearings (14a, 14b) at least partly, to interact with a rotor (34) which is arranged on the actuating shaft (10) between the bearings (14a, 14 b), and
f) the actuator (42) comprising an actuator-electromagnet (38) which is arranged in the stator (24),
wherein
g) the actuator comprises a magnetic element (36) of ferromagnetic material that is arranged on the actuating shaft (10) and constitutes a reluctance force actuator (42) with the actuatorelectromagnet (38),
h) wherein the rotor (34) comprises permanent magnets (32a, 32b) and the magnetic element (36) is arranged between the permanent magnets (32a, 32b), or
i) the rotor (34) comprises sheet packages with an internally shortcircuited cage winding and the magnetic element (36) is arranged between these sheet packages, particularly without the cage winding interspersing the magnetic element.

2. The work spindle according to claim 1, **characterised by** the actuator (42) being arranged so that balancing force (Fₘ) affects the actuating shaft (10) radially, particularly radially to the outside.

3. The work spindle according to one of the preceding claims **characterised by** the fact that the actuating shaft (10), in case of the radial disturbance force (Fr) affecting the free end (12), having a maximum deviation point (18) of maximum deviation from the rotation axis (16) between the bearings (14a, 14b), and that the actuator (42) is arranged in the surroundings of the maximum deviation point (18).

4. The work spindle according to one of the preceding claims **characterised by** the fact that
- the stator (24) has motor electromagnets (26a, 26b) and a motor power supply (28) to supply the motor electromagnets (26a, 26b) with electricity and by the fact that
- the work spindle (20) comprises an actuator power supply (46) independent of the motor power supply (28) to supply the actuator-electromagnets (38) with electricity.

5. The work spindle according to claim 4 **characterised by** the fact that the motor electromagnets (26a, 26b) are arranged in at least two windings, which can be supplied with current separately, for each phase.

6. The work spindle according to one of the preceding claims **characterised by** the fact that the magnetic element (36) is made of sheets that are electrically isolated against each other.

7. The work spindle according to one of the preceding claims **characterised by** the fact that the magnetic element (36) is arranged in the surroundings of the maximum deviation point (18), particularly in the surroundings of a middle between the two bearings (14a, 14b).

8. The work spindle according to one of the preceding claims **characterised by** the fact that the winding of the motor electromagnet (26a, 26b) is arranged in such a way that it passes through the actuator-electromagnet (38) axially in such a way that no essential interaction between motor electromagnet (26a, 26b) and actuator-electromagnet (38) develops.

9. The work spindle according to one of the preceding claims **characterised by** a sensor (48) to capture the deviation of the actuating shaft (10) from the rotation axis (16).

10. The work spindle according to claim 9 **characterised by** a controller (30) being connected to the sensor (48) and arranged to control or regulate the actuator (42) so that the actuator (42) raises the balancing force (Fₘ) an the actuating shaft (10) that counteracts the deviation of the actuating shaft (10).

11. The work spindle according to one of the preceding claims **characterised by** the fact that
- the stator (24) has motor electromagnets (26a, 26b) and a motor power supply (28) to supply the motor electromagnets (26a, 26b) with electricity and by the fact that
- the motor power supply (28) comprises a controller (30) that is arranged to control the motor electromagnets (26a, 26b),
- so that the motor electromagnets (26a, 26b) interact with the magnetic element (36) in raising the balancing force (Fm) an the actuating shaft (10) that counteracts the deviation.

12. A cutting machine tool with a work spindle (20) according to one of the claims 1 to 11.

## Revendications

1. Broche de travail (20), en particulier pour une machine-outil à enlèvement de matière, comprenant
a) un arbre d'entrainement (10), qui comporte une extrémité libre (12) pour entrainer un outil d'enlèvement de matière (52),
b) deux paliers (14a, 14b), dans lesquels l'arbre d'entrainement (10) est monté avec faculté de rotation autour d'un axe de rotation (16), et
c) un entrainement (22) pour l'arbre d'entrainement (10), de sorte que, lorsqu'une force perturbatrice radiale (Fₚ) agit sur l'extrémité libre (12), l'arbre d'entraînement (10) présente une déflexion par rapport à l'axe de rotation (16) entre les paliers (14a, 14b),
d) un actionneur (42) agencé entre les paliers (14a, 14b) pour appliquer sur l'arbre d'entrainement (10) une force compensatrice (Fₘ) agissant à l'encontre de la déflexion,
e) dans laquelle l'entrainement (22) comprend un stator (24) qui entoure l'arbre d'entrainement (10) au moins partiellement entre les paliers (14a, 14b), afin de coopérer avec un rotor (34) agencé sur l'arbre d'entrainement (10) entre les paliers (14a, 14b), et
f) dans laquelle actionneur (42) comprend un électroaimant (38) qui est agencé dans le stator (24), **caractérisée en ce que**
g) dans l'actionneur comprend un élément magnétique (36) en matériau ferromagnétique, qui est agencé sur l'arbre d'entrainement (10) et qui forme conjointement avec l'électroaimant (38) de l'actionneur un actionneur à force de réluctance
h) dans laquelle rotor (34) comprend des aimants, permanents (32a, 32b) et l'élément magnétique (36) est agenc6 entre les aimants permanents (32a, 32b) ou,
i) dans laquelle rotor (34) comprend des empilements de tôles avec un bobinage de cage en court-circuit sur lui-même, et l'élément magnétique (36) est agencé entre ces empilements de tôles, en particulier sans que le bobinage de cage traverse l'élément magnétique.

2. Broche de travail selon la revendication 1, **caractérisée en ce que** ('actionneur (42) est ainsi réalisé que la force de compensation (Fₘ) agit radialement sur l'arbre d'entrainement (10), en particulier radialement vers l'extérieur.

3. Broche de travail selon l'une des revendications précédentes, **caractérisée en ce que**, lorsque la force perturbatrice radiale (Fₚ) agit sur l'extrémité libre (12), l'arbre d'entrainement (10) présente entre les paliers (14a, 14b) un emplacement bombé (18) à déflexion maximum par rapport à l'axe de rotation (16), et **en ce que** l'actionneur (42) est agencé dans les environs de l'emplacement bombé (18).

4. Broche de travail selon l'une des revendications précédentes, **caractérisée en ce que**
- le stator (24) comprend des électroaimants d'entrainement (26a, 26b) et une alimentation électrique d'entrainement (28) pour l'alimentation des électroaimants d'entrainement (26a, 26b) en courant,
et **en ce que**
- la broche de travail (20) comprend une alimentation électrique d'actionnement (46), indépendante de l'alimentation électrique d'entrainement (28), pour l'alimentation des électroaimants d'actionnement (38) en courant.

5. Broche de travail selon la revendication 4, **caractérisée en ce que** les électroaimants d'entrainement (26a, 26b) sont agencés dans au moins deux ramifications de bobinage, susceptibles d'être alimentées séparément en courant, pour chaque phase.

6. Broche de travail selon l'une des revendications précédentes, **caractérisée en ce que** l'élément magnétique (36) est constitué de tôles qui sont isolées électriquement les unes par rapport aux autres.

7. Broche de travail selon l'une des revendications précédentes, **caractérisée en ce que** l'élément magnétique (36) est agencé dans les environs de l'emplacement bombé (18), en particulier dans les environs d'un milieu entre les deux paliers (14a, 14b).

8. Broche de travail selon l'une des revendications précédentes, **caractérisée en ce que** le bobinage de l'électroaimant d'entrainement (26a, 26b) est ainsi réalisé qu'i l traverse axialement l'électroaimant d'actionnement (38) de telle façon qu'il n'apparait sensiblement aucune interaction entre l'électroaimant d'entrainement (26a, 26b) et l'électroaimant d'actionnement (38).

9. Broche de travail selon l'une des revendications précédentes, **caractérisée par** un capteur (48) pour détecter la déflexion de l'arbre d'entrainement (10) par rapport à l'axe de rotation.

10. Broche de travail selon la revendication 9, **caractérisée par** une commande (30) qui est connectée au capteur (48) et qui est conçue pour commander ou réguler l'actionneur (42) de telle façon que l'actionneur (42) applique sur l'arbre d'entrainement (10) la force de compensation (Fₘ) agissant à l'encontre de la déflexion de l'arbre d'entrainement (10).

11. Broche de travail selon l'une des revendications précédentes, **caractérisée en ce que**
- le stator (24) comprend des électroaimants d'entrainement (26a, 26b) et une alimentation électrique d'entrainement (28) pour l'alimentation des électroaimants d'entrainement (26a, 26b) en courant, et **en ce que**
- l'alimentation électrique d'entrainement (28) comprend une commande (30) qui est réalisée pour la commande des électroaimants d'entrainement (26a, 26b),
- de sorte que les électroaimants d'entrainement (26a, 26b) coopèrent avec l'élément magnétique (36) pour appliquer sur l'arbre d'entrainement (10) la force de compensation (Fₘ) agissant à l'encontre de la déflexion.

12. Machine-outil à enlèvement de matière comprenant une broche de travail (20) selon l'une des revendications 1 à 11.
